# EUROPEAN PATENT SPECIFICATION

(11) **EP 3 740 661 B1**
(45) Date of publication and mention of the grant of the patent: **21.02.2024**
(21) Application number: 19787631.1
(22) Date of filing: 02.01.2019
(51) Int. Cl.: F01P 7/16, F01P 3/02, G05D 23/02, F01P 7/14

(54) **SIMULTANEOUSLY ACTUATED THERMOSTATIC VALVE IN ACCORDANCE WITH TEMPERATURE VALUES OF DIFFERENT ENGINE SENSING POINTS ON COOLING SYSTEM**
GLEICHZEITIG BETÄTIGTES THERMOSTATVENTIL IN ABHÄNGIGKEIT VON TEMPERATURWERTEN VERSCHIEDENER MOTORMESSSTELLEN AM KÜHLSYSTEM
VANNE THERMOSTATIQUE ACTIONNÉE SIMULTANÉMENT EN FONCTION DES VALEURS DE TEMPÉRATURE DE DIFFÉRENTS POINTS DE DÉTECTION DU MOTEUR SUR LE SYSTÈME DE REFROIDISSEMENT

(30) Priority: 17.01.2018 TR 201800656
(43) Date of publication of application: 25.11.2020
(73) Proprietor: KIRPART OTOMOTIV PARÇALARI SANAYI VE TICARET A.S., 16800 Bursa (TR)
(72) Inventor: UNLUASLAN, Faruk, 16140 Nilufer/Bursa (TR); KANBUR, Hikmet, 16800 Orhangazi/Bursa (TR)
(74) Representative: Demirkiran, Hasan
(86) International application number: PCT/TR2019/050001
(87) International publication number: WO 2019/203757

(56) References cited:
- WO-A1-2012/064293
- US-A- 4 606 302
- US-A- 5 195 467
- US-A- 6 065 682
- US-A1- 2010 175 640
- US-A1- 2016 177 809
- US-A1- 2017 114 700

## Description

### Technical Field

The invention relates to an engine cooling system with a wax-based tandem thermostat assembly which ensures that the engine in the appropriate temperature range of work by adjusting coolant flow ratio between bypass outlet and the radiator outlet according to the coolant temperature values at the different engine sensing points of the engine cooling system.

Specifically, the present invention relates to a thermostat assembly adjusting the coolant amount ratio between the bypass circuitry and the heat exchange circuitry according to both the engine outlet temperature via inlet channel and the engine inlet temperature via sensing inlet channel on the thermostat assembly.

### Prior Art

Combustion engines are the engines in which fuel is burned in a combustion chamber having limited interior space. The high pressure obtained as a result of the combustion occurred in the limited space is converted to kinetic energy. So, the movement of the vehicle becomes possible.

In today's technology, it is not possible that the chemical energy within the fuel is converted totally to useable energy. Consequently, during combustions, the temperature of both combustion chamber and related parts rises to extreme temperature values which could damage all motor system irreversibly. So, it is crucial to remove the access heat accumulated over both engine and engine parts. Removing of this excess heat is provided by engine cooling system.

All engine cooling system aim to ensure that engine operates in appropriate temperature range of work. A cooling system generally comprises engine channels, radiator channels, a thermostat assembly and circulation pump. The main issue within a cooling system is belong to the thermostat assembly. Thermostat assembly determines whether the temperature of the engine coolant flowing through engine channels is within appropriate temperature range of work for engine or not. If the coolant temperature is above the appropriate temperature range of work, thermostat assembly directs the coolant as flowing through the heat exchange circuitry (radiator channels, engine channels, thermostat assembly, circulation pump) to be cooled and reduces or totally prevents the coolant flow through bypass circuitry (engine channels, thermostat assembly, circulation pump). Vice versa, if the coolant temperature falls below the appropriate temperature range of work, thermostat assembly reduces or totally prevents the coolant flow through the heat exchange circuitry and allows the coolant circulation through the bypass circuitry again. It means the thermostat assembly decides the coolant flow ratio between two coolant circulation circuitries (by-pass circuitry and heat exchange circuitry) according to the engine coolant temperature value.

There are different type thermostat assemblies according to their location within the cooling system: return line-located thermostat assemblies and supply line-located thermostat assemblies. In recent years, it has been increasingly popular to use thermostat assemblies located in the supply line (engine inlet) between bottom of the radiator (outlet of radiator) and the circulation pump than thermostat assemblies located in the return line (engine outlet) between engine and top of the radiator (inlet of radiator). Difference between these thermostat assemblies is that return line-located thermostat assembly acts according to the temperature value of engine outlet coolant while supply line-located thermostat assembly acts according to the temperature value of engine inlet coolant. Actually, there is no superiority each other, both are insufficient to sense actual temperature value of engine coolant flowing through the engine channels since they act according to the temperature value taken just from a sensing point of cooling system. So, since all thermostat assemblies operate according to just one sensing point on the cooling system, they are not sufficient to keep engine in the appropriate temperature range of work.

There are also map-controlled engine cooling systems using externally-sourced heater within thermo-actuator of thermostat assembly. These heaters provide the wax compound within the heat sensitive part of thermo-actuator to warm externally according to estimated engine conditions during a cruising/trip. Engine designers who know the engine conditions well could estimate the cooling necessities of an engine during operation. Consequently, they define cooling maps according to the possible cases of engine. However, although the map controlled engine cooling systems show a great performance by ensuring engine in the appropriate temperature range of work, they need more organization. The thermo-actuators used in map-controlled system has an externally-sourced heater in their core portions. So, production process of these thermal element is very complicated and costs more than production process of the thermal elements used in conventional thermostat assemblies.

Therefore, there is a need for cooling system which both could show great performance by ensuring engine in the appropriate temperature range of work like the map-controlled cooling systems and does not require more organization like cooling systems comprising conventional thermostat assembly.

The document US 20170248067 A1 mentions a method and system providing control of coolant circulation in engine by accurately controlling the coolant temperature. This method comprises selecting a reference inlet temperature for a coolant flowing through a coolant inlet of an engine and sensing both an actual inlet temperature value of the coolant flowing through coolant inlet of the engine and an actual outlet temperature value of a coolant flowing through a coolant outlet of the engine. Thus, the reference inlet temperature is varied according to the difference between these two temperature values and open amount of a coolant valve unit is controlled to follow the varied reference inlet temperature value. Although this method mentioned in the document US 20170248067 is also about an engine cooling system in which a coolant circulation is controlled according to both engine inlet temperature and engine outlet temperature, here, the difference value between engine inlet temperature and the engine outlet temperature is used to control mentioned valve unit. Also, the method needs a reference engine inlet temperature value which is selected based on the actual inlet temperature value of the coolant flowing through the coolant inlet of the engine. Besides, here, despite of the description of the cooling system acting according to the actual temperature difference between inlet coolant and outlet coolant of the engine, it is not mentioned about a thermostat assembly structure which could provide mentioned cooling method. It is just mentioned that a first and second coolant temperature sensors that are respectively installed at the coolant inlet and the coolant outlet of engine to sense a first and a second temperature of the coolant respectively and; a controller that senses the first and the second temperatures of the coolant through the first and second coolant temperature sensors respectively. Other alternative engine cooling systems with dual actuators are also disclosed in the documents US2010/175640A1 and US4606302A.

As a result, there is any invention about thermostat assembly comprising tandem actuators which has own inlet channels coming from different sensing points of the cooling system. So, the solution of the present invention is required.

### Objectives and Short Description of the Invention

The aim of the present invention is to present thermostat assembly adjusting coolant flow ratio between bypass circuitry and heat exchange circuitry according to actual temperature values at different sensing points of the engine cooling system.

Another aim of the present thermostat assembly is to provide more sensitivity and accuracy in engine cooling system by using feedback temperature information taken from two different sensing points on the engine cooling system.

### Description of the Figures

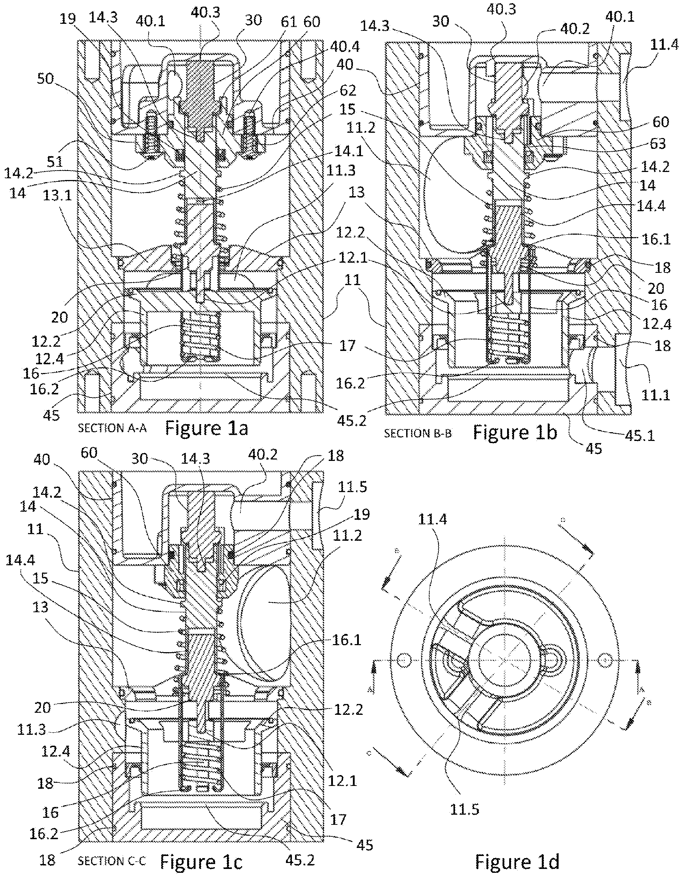

Cross-sectional views of the present thermostat assembly in partially open position are given in figures 1a, 1b and 1c. At this thermostat position there are coolant circulations through both the bypass circuitry (engine channels) and heat exchange circuitry (radiator channels and engine channels).

A top sectional view of the present thermostat is given in figure 1d. The view shows sensing inlet channel structure and sensing radiator outlet channel structure within the thermostat housing as well as the sections related to figure 1a, 1b and 1c.

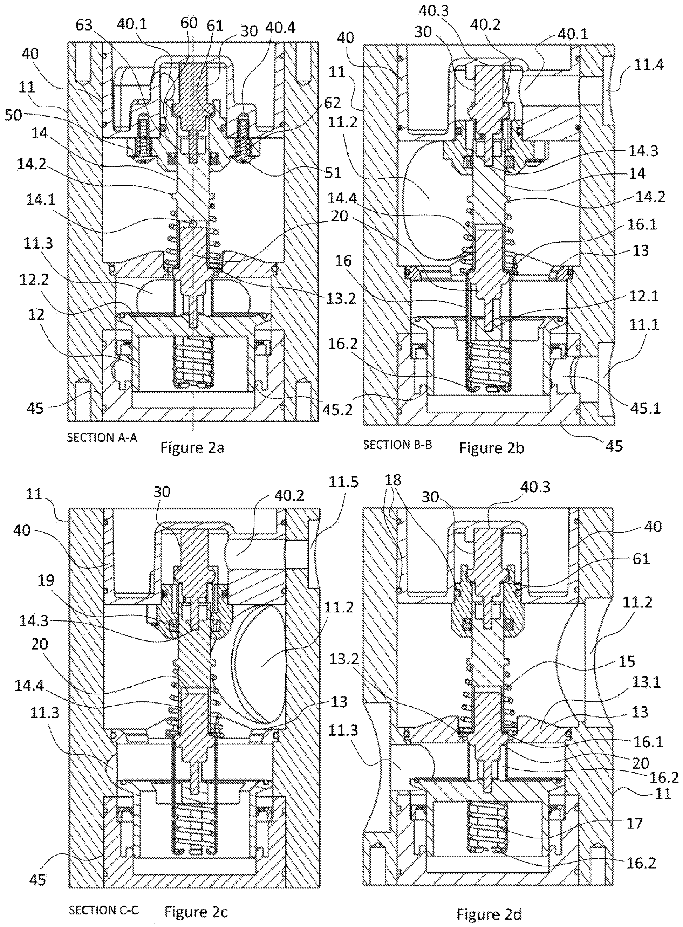

Cross-sectional views of the present thermostat assembly in fully open position and at same perspective with the figure 1a, 1b, 1c are given in figures 2a, 2b and 2c, respectively. At this thermostat position there is coolant circulation through just the heat exchange circuitry.

In figure 2d, there is also a cross-sectional view of present thermostat assembly taken from where the inlet and radiator outlet face to each other.

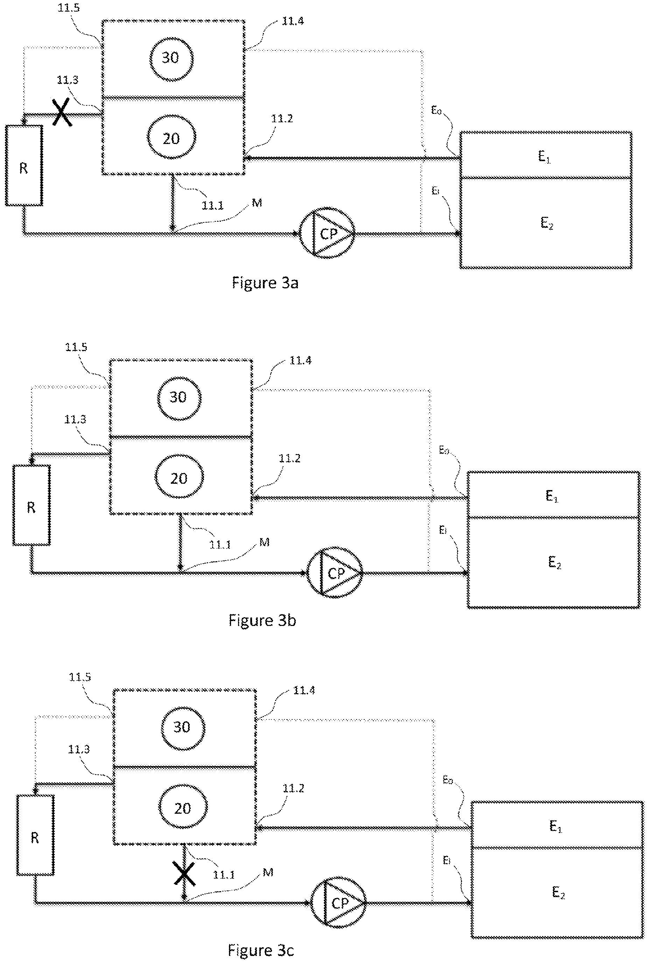

Figure 3 shows the engine cooling circuitry comprising the present thermostat assembly, and the connections between said thermostat assembly, engine blocks (cylinder head and crank case assembly) and radiator. As seen this diagram, the difference between the present thermostat assembly and conventional three-way thermostat assembly comprising one inlet-two outlets is that the present thermostat assembly has a sensing inlet coming from engine inlet and sensing radiator outlet going to radiator channels a well as the three-way (inlet, bypass outlet, radiator outlet).

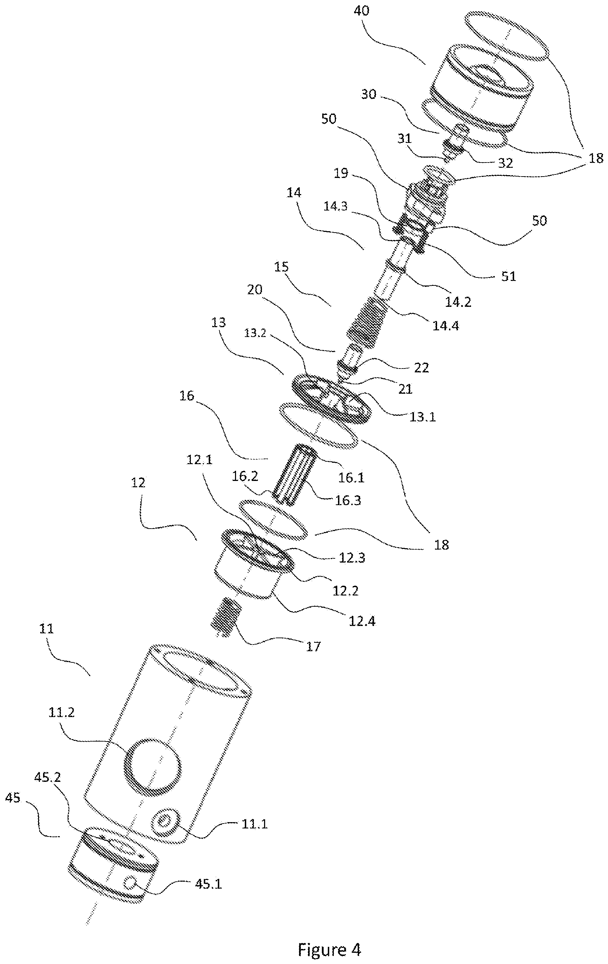

An exploded perspective view of the present thermostat assembly is given in figure 4.

### Reference Numerals

- 10.: Thermostat assembly
- 11.: Frame
- 11.1.: Bypass Outlet
- 11.2.: Inlet
- 11.3.: Radiator outlet
- 11.4.: Sensing inlet
- 11.5.: Sensing radiator outlet
- 12.: Valve
- 12.1.: Primary piston seat
- 12.2.: Valve sleeve
- 12.3.: Valve inner projections
- 12.4.: Valve enclosure
- 13.: Valve seat
- 13.1: Valve seat inner projections
- 13.2: Spring seat
- 14.: Connection shaft
- 14.1.: Air discharge hole
- 14.2.: Spring stopper
- 14.3.: Secondary piston seat
- 14.4.: Primary thermo-actuator seat
- 15.: First spring
- 16.: Spring holder
- 16.1.: Spring holder head
- 16.2.: Spring holder claws
- 16.3: Spring holder arms
- 17.: Second spring
- 18.: O-ring sealing element
- 19.: U-cap sealing element
- 20.: Primary thermo-actuator
- 21.: Primary piston
- 22.: Primary sleeve
- 30.: Secondary thermo-actuator
- 31.: Secondary piston
- 32.: Secondary sleeve
- 40.: First cover
- 40.1.: First cover-sensing inlet
- 40.2.: First cover-sensing radiator outlet
- 40.3.: Secondary thermo-actuator seat
- 40.4.: First cover-screw hole
- 45.: Second cover
- 45.1: Second cover-bypass outlet
- 45.2: Second cover-valve seat
- 50.: Bush
- 51.: Screw
- 60.: Adapter
- 61.: Adapter- secondary sleeve seat
- 62.: Adapter-screw hole
- 63.: Adapter-connection shaft seat
- M.: Mixed coolant
- Ei.: Engine inlet
- Eo.: Engine outlet
- E1.: Cylinder head
- E2.: Crank Case Assembly
- R.: Radiator
- CP.: Circulation pump

### Detailed Description of the Invention

This invention relates to a thermostat assembly (10) which provide temperature control of engine cooling system according to obtained coolant temperature values from different sensing points of cooling system via the isolated heat sensitive parts of tandem actuators.

Engine cooling systems aim to keep engine in an appropriate temperature range of work during cruising. Engine efficiency of a vehicle is directly related to the cooling ability of a cooling system. It is crucial to remove the excess heat accumulated on cylinder head (E1) and crank case assembly (E2) for efficiency.

The thermostat assemblies (10) in art, which comprises just single wax-based thermo-actuator, are not sufficient to provide the proper cooling for engines by acting according to just one sensing point temperature value. With the map-controlled engine cooling system, the problem (insufficient cooling of engine) arised due to conventional thermostat operation actualized according to single sensing point temperature value of the cooling system are prevented by controlling the engine cooling system according to measured or the estimated temperature values in the ever-changing engine conditions during a cruising. Despite of the advantages provided by the map-controlled engine cooling system, the map-controlled engine cooling systems cost much more than the conventional self-controlled thermostat assemblies (10) comprising single wax-based thermo-actuator.

The present invention relates to a thermostat assembly (10) operating according to sum of the stroke coming from wax-based tandem actuators which's heat sensitive parts are isolated each other within the thermostat housing and responsive to temperature values of different sensing point over/on engine cooling system. So, it is possible to provide proper cooling with precisely coolant temperature control of the system like map-controlled engine cooling system but without the high amount of cost like conventional cooling system.

The present thermostat assembly (10) comprises a primary thermo-actuator (20) acting according to engine outlet (Eo) coolant temperature (main flow temperature) value, a secondary thermo-actuator (30) acting according to engine inlet (Ei) temperature (pilot flow temperature) value, a valve (12) structure whose position specifies the coolant flow direction in the engine cooling system by changing according to total stroke coming each actuator, a frame (11) structure which, guiding the mentioned valve (12) structure, comprises an inlet (11.2) portion coming from engine outlet (Eo) to the heat sensitive part of the primary thermo-actuator (20), a sensing inlet (11.4) portion coming from engine inlet (Ei) to the heat sensitive part of secondary thermo-actuator (30), a sensing radiator outlet (11.5) portion for the coolant coming from sensing inlet (11.4) to flow toward radiator (R) channels through heat exchange circuitry, a radiator outlet (11.3) portion for the coolant coming from inlet (11.2) to flow toward radiator (R) channels through heat exchange circuitry and an outlet (11.1) portion for the coolant coming from inlet (11.2) to flow toward engine channels through bypass circuitry, a connection shaft (14) which provides the secondary piston (31) stroke to be transmitted to primary piston (21), consequently said valve (12) structure by allowing the stroke direction of secondary piston (31) to be same with the one of the primary piston (21), a first spring (15) storing potential energy while said valve (12) structure moves forward as a result of stroke coming from secondary thermo-actuator (30), a second spring (17) storing potential energy while said valve (12) structure moves forward as a result of stroke coming from primary thermo-actuator (20), a spring holder (16) holding the primary sleeve (22) on mentioned primary thermo-actuator (20) by a spring holder head (16.1) at top portion and mentioned second spring (17) by spring holder claws (16.2) at bottom portion to limit further motion of the valve (12) structure, a valve seat (13) which comprises valve seat inner projection (13.1) portions corresponding to valve inner projections (12.3) of valve (12) structure and a spring seat (13.2) portion preventing the first spring to pass through thereof, an adapter (60) comprising an adapter-secondary sleeve seat (61) portion, adapter-screw hole (62) portions and an adapter-connection shaft seat (63) portion, O-ring sealing elements (18) which are used between different mounting parts of the thermostat assembly (10), a U-cap sealing element (19) which is inserted between mentioned adapter (60) and outer surface of mentioned connection shaft (14) to provide isolation between chambers where the heat sensitive parts of the actuators are located within, a first cover which comprises a first cover-sensing inlet (40.1) portion corresponding to sensing inlet (11.4) on said frame (11) structure, a first cover-sensing radiator outlet (40.2) portion corresponding to sensing radiator outlet (11.5) on the frame (11) structure, a secondary thermo-actuator seat (40.3) portion and first cover-screw hole portions for connecting with the adapter (60) to provide isolated chambers by separating the heat sensitive part of the secondary thermo-actuator (30) from the one of the primary thermo-actuator (20), screws (51) which provide the adapter (60) and the first cover (40) to be connected by merging them via bushes (50) at the point where mentioned first cover-screw hole (40.4) and adapter-screw hole (62) are coincident for isolation of heat sensitive parts of each actuator from each other, and lastly a second cover (45) that comprises a second cover-bypass outlet (45.1) portion corresponding to the bypass outlet (11.1) on the frame (11) structure and a second cover-valve seat (45.2) portion on its inner side surface.

In the present invention, the proper temperature control in the engine cooling system is provided by tandem actuators having own inlet (each coolant flow coming from different sensing point of engine cooling system) and by heat sensitive parts of mentioned tandem actuators isolated each other. It could be better to explain the invention through the figures from 1 to 4 for a better understanding.

In the figure 1a, 1b and 1c, there are cross-sectional views of the present thermostat assembly (10) in partially open position. A top sectional view of the present thermostat assembly (10) is given in figure 1d. Section A, B and C which correspond to the views in figure 1a, 1b and 1c respectively, are shown on this top sectional view. Partially open thermostat position means there are main coolant flows from inlet (11.2) to both radiator outlet (11.3) through the heat exchange circuitry and bypass outlet (11.1) through the bypass circuitry.

The cross-sectional views in figure 2a, 2b and 2c are also respectively correspond to the section A, B and C shown in figure 1d but they are the views for the fully open thermostat position. Also, another cross-sectional view of the present thermostat assembly (10) at fully open position is given in figure 2d. Fully open thermostat position means there is a main coolant flow from inlet (11.2) to just radiator outlet (11.3) through the heat exchange circuity.

Besides, at each thermostat position (fully closed, partially open, fully open) there is also a pilot sensing coolant flow from sensing inlet (11.4) to sensing radiator outlet (11.5) as well as main coolant cycle/s. Sensing inlet (11.4) temperature value is equal to temperature value of the engine inlet (Ei) coolant while the inlet (11.2) temperature value is equal to the temperature value of the engine outlet (Eo) coolant. Consequently, the heat sensitive part of secondary thermo-actuator (30) is corresponding to the engine inlet (Ei) coolant temperature value while the heat sensitive part of primary thermo-actuator (20) is corresponding to the engine outlet (Eo) coolant temperature value. Since heat sensitive part of each actuator are isolated each other, secondary thermo-actuator (30) operates according to just the temperature value of the engine inlet (Ei) coolant coming via sensing inlet (11.4) channel while primary thermo-actuator (20) operates according to just the temperature value of the engine outlet (Eo) coolant which coming via inlet (11.2) channel. The mentioned isolation is provided by connecting the adapter (60) and first cover (40) at the points where the adapter-screw hole (62) portions and the first cover-screw hole (40.4) portions are coincident to form an isolated chamber for the heat sensitive part of the secondary thermo-actuator (30).

Sensing coolant flow coming from engine inlet (Ei) to sensing inlet (11.4) passes through this isolated chamber and then fall out to the radiator (R) channels from sensing radiator outlet (11.5). In the same manner, the main coolant flow coming from engine outlet (Eo) to inlet (11.2) passes through the rest portion of thermostat housing and then fall out to the radiator (R) channels from radiator outlet (11.3) and/or to bypass channels from bypass outlet (11.1). Direction of the main coolant flow (just to radiator (R) channels, just to bypass channels or to both of them) is determined according to sum of the strokes coming from each thermo-actuator. This means that, here, temperature control of coolant is provided according to temperature feedbacks taken from both engine outlet (Eo) coolant and engine inlet (Ei) coolant. Unlike the conventional thermostat assembly (10) providing temperature control of engine cooling system according to the temperature values of just one sensing point (engine outlet (Eo) or engine inlet (Ei)) of the cooling system, the present thermostat assembly (10) provides temperature control of engine cooling system according to the temperature values of two different sensing points (engine outlet (Eo) and engine inlet (Ei)) of cooling system. Thanks to the temperature feedbacks taken from two different sensing points on cooling system, it is possible to control engine coolant temperature more precisely than the conventional engine cooling systems.

Figure 3a, 3b and 3c show the main coolant flows (through bypass circuitry or/and heat exchange circuitry) and the sensing coolant flow (through heat exchange circuitry) for fully closed, partially open and fully open position of the present thermostat assembly (10), respectively. The sensing coolant flow is shown with light-dashes line while main coolant flows are shown with dark-flat lines in these figures.

The diagram in figure 3a is corresponding to the fully closed thermostat position allowing main coolant flow from inlet (11.2) just to bypass outlet (11.1) (through bypass circuitry) as well as the sensing coolant flow from sensing inlet (11.4) to sensing radiator outlet (11.5) (through heat exchange circuitry). This thermostat position corresponds the conditions when the temperature value of either engine outlet (Eo) coolant and engine inlet (Ei) coolant is not enough to activate the primary thermo-actuator (20) and the secondary thermo-actuator (30), respectively. This means both engine inlet (Ei) and engine outlet (Eo) coolant temperature values are appropriate for engine to operate efficiently. Therefore, there is not a need for engine cooling. Since, here, the total stroke coming from each actuator is zero, the valve (12) structure does not move forward, consequently the valve enclosure (12.4) too. Therefore, the radiator outlet (11.3) continues to be in fully closed position while the bypass outlet (11.1) continues to be in fully open position. So, at this fully closed thermostat position, the main engine coolant flow coming from engine outlet (Eo) continues to flow through the bypass circuitry by passing just from the bypass outlet (11.1). Here, since the radiator outlet (11.3) is fully closed while the bypass outlet (11.1) is fully open, the temperature value of sensing coolant flow coming from engine inlet (Ei) coolant is equal to the temperature value of the mixed coolant (M) comprising the return sensing coolant flow (sensing flow coming from radiator (R) bottom channels to engine inlet (Ei) as complementary of the sensing flow circuitry) and the bypass outlet (11.1) coolant flow. As seen from the X in figure 3a, at this thermostat position, there is not coolant flow from radiator outlet (11.3) to radiator (R) channels. However, there are the main coolant flow from bypass outlet (11.1) through bypass circuitry and the sensing coolant flow from sensing radiator outlet (11.5) through the heat exchange circuitry.

The diagram in figure 3b is corresponding to the partially open thermostat position allowing main coolant flows from inlet (11.2) to both bypass outlet (11.1) and radiator outlet (11.3) (through heat exchange circuitry) as well as the sensing coolant flow from sensing inlet (11.4) to sensing radiator outlet (11.5). As seen in figure 1a, 1b and 1c, at this partially thermostat position, the temperature value of engine outlet (Eo) coolant is high enough to fully activate the primary thermo-actuator (20) while the temperature value of engine inlet (Ei) coolant is not enough to activate the secondary thermo-actuator (30). This means engine outlet (Eo) coolant temperature value is not appropriate for the engine to operate efficiently while the engine inlet (Ei) coolant temperature value is appropriate. Therefore, there is a need for engine cooling. Since, here, there is just a stroke coming from primary thermo-actuator (20), the total stroke value also equals the stroke amount of primary thermo-actuator (20). So, the valve (12) structure moves forward as a result of the total stroke value (that just comes from the primary actuator), consequently the valve enclosure (12.4) too. As a result of forward motion of this valve (12) and valve enclosure (12.4), the radiator outlet (11.3) changes position from fully closed to partially open while the bypass outlet (11.1) changes position from fully open position to partially open. So, at this partially open position of the present thermostat assembly (10), the main engine coolant flow coming from engine outlet (Eo) starts to pass also from the radiator outlet (11.3) through the heat exchange circuitry as well as the bypass outlet (11.1) through the bypass circuitry. Here, since both radiator outlet (11.3) and the bypass outlet (11.1) is partially open, the temperature value of sensing coolant flow coming from engine inlet (Ei) coolant is equal to the temperature value of the mixed coolant (M) comprising radiator outlet (11.3) coolant flow as well as the return sensing coolant flow and bypass outlet (11.1) coolant flow. As seen from the figure 3b, there is also the main coolant flow from radiator outlet (11.3) through the heat exchange circuitry as well as main coolant flow from bypass outlet (11.1) through bypass circuitry and the sensing coolant flow from sensing radiator outlet (11.5) through the heat exchange circuitry.

The diagram in figure 3c is corresponding to the fully open thermostat position allowing main coolant flow from inlet (11.2) to just radiator outlet (11.3) as well as the sensing flow from sensing inlet (11.4) to sensing radiator outlet (11.5). As seen in figure 2a, 2b and 2c, at this fully open thermostat position, the temperature value of both engine outlet (Eo) coolant temperature value and engine inlet (Ei) coolant temperature value are high enough to fully activate the primary thermo-actuator (20) and secondary thermo-actuator (30), respectively. This means both engine outlet (Eo) and engine inlet (Ei) coolant temperature value are not appropriate for the engine to operate efficiently. Therefore, there is an urgent need for engine cooling. Since, here, there are stokes coming from both primary thermo-actuator (20) and secondary thermo-actuator (30), the total stroke value also equals sum of the stokes amount coming each actuator. So, the valve (12) structure moves further as a result of the total stroke value (that comes from both actuators), consequently valve enclosure (12.4) too. As a result of further motion of this valve (12) and valve enclosure (12.4), radiator outlet (11.3) changes position from partially open to fully open while the bypass outlet (11.1) changes position from partially open to fully closed. So, at this fully open position of the present thermostat assembly (10), the main engine coolant flow coming from engine outlet (Eo) is prevented to pass from the bypass outlet (11.1) through the bypass circuitry while this main coolant continues to flow from radiator outlet (11.3) through the heat exchange circuitry. Here, since the radiator outlet (11.3) is fully open while the bypass outlet (11.1) fully closed, the temperature value of the sensing coolant flow coming from engine inlet (Ei) coolant is equal to the temperature value of the mixed coolant (M) comprising radiator outlet (11.3) coolant flow and the return sensing coolant flow. As seen from the figure 3c, there is the main coolant flow just from radiator outlet (11.3) through the heat exchange circuitry as well as the sensing coolant flow from sensing radiator outlet (11.5) through the heat exchange circuitry.

In figure 4, an exploded perspective view of the present thermostat assembly (10) is given. As seen from this exploded perspective view, O-ring sealing elements (18) are used at many locations of the present thermostat assembly (10) to prevent coolant leakages and provide isolation between chambers where each actuator's heat sensitive part is located. O-ring sealing elements (18) are inserted at the connection locations between the frame (11) and first cover (40) (both top and bottom potions of the first cover (40)'s outer side surface), between first cover (40) and adapter (60), between the outer portion of the valve seat (13) and frame (11), between valve sleeve (12.2) and frame (11) etc. Besides, a U-cap sealing element (19) is located at the connection portion between the adapter (60) and the connection shaft (14).

The isolation between heat sensitive parts of actuators is provided by connecting the first cover-screw hole (40.4) and adapter-screw hole (62) with screws (51) as forming a chamber for the heat sensitive part of second thermo-actuator (30). Also, the O-ring sealing element (18) located at the connection portion between the first cover (40) and the adapter (60) and the U-cap sealing element (19) located at the connection portion between the adapter (60) and the connection shaft (14) provide isolation of this closed chamber. Said adapter (60) structure has both an adapter-connection shaft seat (63) structure for connection shaft (14) and an adapter-secondary sleeve seat (61) structure for secondary sleeve (32) structure of secondary thermo-actuator (30) to locate thereof.

Also, said connection shaft (14) has both a secondary piston seat (14.3) structure for the piston end of secondary thermo-actuator (30) at its top portion and a primary thermo-actuator seat (14.4) structure for the heat sensitive part of the primary thermo-actuator (20) at its bottom portion to locate thereof.

Said first spring (15) is located between a spring stopper (14.2) structure formed on the connection shaft (14) and a spring seat (13.2) structure of the valve seat (13) as holding the heat sensitive portion of the secondary thermo-actuator (30). So, the first spring (15) has a restricted stretch distance between said spring stopper (14.2) and spring seat (13.2) structures. The first spring (15) structure gradually expands versus the primary sleeve (22) structure on the primary thermo-actuator (20) as holding said primary sleeve (22) at its end portion.

Second spring (17) is located between spring holder claws (16.2) and the valve inner projections (12.3). Spring holder (16) is restricted to move forward by the connection joint between valve inner projections (12.3) and, spring holder arms (16.3) hold the second spring (17) by passing the valve inner projections (12.3). The aim of said spring holder (16) is to limit further motion of the valve (12) structure versus mentioned second cover (45).

Besides, said valve seat (13) structure has valve seat inner projections (13.1) accordance with the valve inner projections (12.3) of valve (12) to provide a convenient seat place for the valve (12) structure. Also, said valve (12) structure has a primary piston seat (12.1) structure at the connection joint between the valve inner projections (12.3) to be able guided by the piston end of primary thermo-actuator (20) according to total strokes coming from each actuator.

Lastly said second cover (45) is used to hold the other thermostat assembly (10) parts within the frame (11) structure. Also, the second cover (45) has both a second cover-bypass outlet (45.1) corresponding to the bypass outlet (11.1) on the frame (11) structure and a second cover-valve seat (45.2) structure where the end portion of the valve enclosure (12.4) sits thereof at the fully closed position of the present thermostat assembly (10).

## Claims

1. An engine cooling system which, comprising an engine inlet (Ei), an engine outlet (Eo), a radiator (R), a self-controlled wax-based thermostat assembly (10) with a primary thermo-actuator (20), a secondary thermo-actuator (30), a valve (12), a frame (11) structure through where mentioned valve (12) structure is guided, a connection shaft (14), a first spring (15), a second spring (17), a spring holder (16), a valve seat (13), an adapter (60), O-ring sealing elements (18), a U-cap sealing element (19), a first cover, screws (51), and lastly a second cover (45), provides precise temperature control of the engine cooling system by adjusting the coolant flow ratio between bypass outlet (11.1) and radiator outlet (11.3)
wherein the engine cooling system is configured to operate according to sum of strokes coming from each thermo-actuator which is corresponding to one inlet connected to different sensing point of the engine cooling system from each other; the self-controlled wax-based thermostat assembly (10) further comprising
- an inlet (11.2) thereby main coolant flows from the engine outlet (Eo) to heat sensitive part of the primary thermo-actuator (20),
- a sensing inlet (11.4) thereby sensing coolant flows from the engine inlet (Ei) to heat sensitive part of the secondary thermo-actuator (30), and
- a sensing radiator outlet (11.5) for channeling sensing coolant coming from sensing inlet (11.4) to flow toward the radiator (R).

2. An engine cooling system according to claim 1 and **characterized by** comprising a sensing inlet (11.4) and sensing radiator outlet (11.5) channels as well as inlet (11.2), bypass outlet (11.1) and the radiator outlet (11.3) channels in the conventional three-way wax based thermostat assembly.

3. An engine cooling system according to claim 1 and 2, wherein heat sensitive part of the secondary thermo-actuator (30) is located between mentioned sensing inlet (11.4) and sensing radiator outlet (11.5) channels while heat sensitive part of the primary thermo-actuator (20) is located between the inlet (11.2), bypass outlet (11.1) and radiator outlet (11.3)

4. An engine cooling system according to claim 1, 2 and 3, wherein the heat sensitive part of each thermo-actuator is thermally isolated each other.

5. An engine cooling system according to claim 1 to 4, wherein secondary thermo-actuator (30) acts according to engine inlet (Ei) coolant temperature value while the primary thermo-actuator (20) acts according to engine outlet (Eo) coolant temperature value.

6. An engine cooling system according to claim 1, wherein the sensing coolant coming from engine inlet (Ei) to heat sensitive part of the secondary thermo-actuator (30) via the sensing inlet (11.4) channel flows out through the sensing radiator outlet (11.5) channel to radiator (R) channels.

7. An engine cooling system according to claim 1 and 5, wherein the engine inlet (Ei) temperature value depends on the temperature value of mixed coolant (M) comprising coolant flow coming both from bottom of radiator (R) and the bypass outlet (11.1) of thermostat assembly (10).

8. An engine cooling system according to claim 7, wherein the coming coolant flow from bottom of radiator (R) is the mixture of the coolant flow coming from both sensing radiator outlet (11.5) and radiator outlet (11.3) of thermostat assembly to radiator (R).

9. An engine cooling system according to claim 1, 7 and 8 wherein temperature value of the mixed coolant (M) depends on the opening ratio between radiator outlet (11.3) and the bypass outlet (11.1), cooling capacity of radiator (R) channels, actuation temperature of actuators and stroke capacity of the actuators.

10. An engine cooling system according to claim 1, wherein the main coolant flow coming from engine outlet (Eo) to heat sensitive part of the primary thermo-actuator (20) through the inlet (11.2) flows out through just bypass outlet (11.1) or just radiator outlet (11.3) or both bypass outlet (11.1) and radiator outlet (11.3) according to the sum of the stroke coming from both thermo-actuators.

11. An engine cooling system according to claim 1, wherein position of mentioned valve (12) structure changes according to total stroke coming from both actuator and specifies the coolant flow direction in the engine cooling system.

12. An engine cooling system according to claim 1, wherein mentioned connection shaft (14) allows the stroke direction of the secondary piston (31) to be same with the one of the primary piston (21) and the valve (12) to be able guided indirectly by second-thermo-actuator.

13. An engine cooling system according to claim 1, wherein mentioned valve seat (13) comprises valve seat inner projections (13.1) corresponding to the valve inner projections (12.3) of valve (12) structure and a spring seat (13.2) preventing the first spring (15) to pass through thereof.

14. An engine cooling system according to claim 1, and **characterized in that** mentioned adapter (60) comprises an adapter-secondary sleeve seat (61), adapter-screw holes (62) and an adapter-connection shaft seat (63) portions and wherein for providing isolation between chambers where the heat sensitive parts of the actuators are located within, mentioned U-cap sealing element (19) is inserted between mentioned adapter (60) and outer surface of mentioned connection shaft (14).

15. An engine cooling system according to claim 1, wherein mentioned first cover (40) comprises a first cover-sensing inlet (40.1) corresponding to sensing inlet (11.4) on said frame (11) structure, a first cover-sensing radiator outlet (40.2) corresponding to sensing radiator outlet (11.5) on the frame (11) structure, a secondary thermo-actuator seat (40.3) and first cover-screw holes (40.4) allowing its connection with the adapter (60) to form isolated chambers for heat sensitive part of each actuator; and mentioned second cover (45) comprises a second cover-bypass outlet (45.1) corresponding to the bypass outlet (11.1) on the frame (11) structure and a second cover-valve seat (45.2) through its inner side surface.

## Patentansprüche

1. Motorkühlsystem zur präzisen Temperaturregelung durch Einstellen des Kühlmitteldurchflussverhältnisses zwischen Bypass-Auslass (11.1) und Kühler-Auslass (11.3), umfassend einen Motoreinlass (Ei), einen Motorauslass (Eo), einen Kühler (R), eine selbstgesteuerte Thermostatbaugruppe (10) auf Wachsbasis mit einem primären Thermoaktuator (20) und einem sekundären Thermoaktuator (30), einen Ventil (12), eine Rahmenstruktur (11), durch die die Ventilstruktur (12) geführt wird, eine Verbindungswelle (14), eine erste Feder (15), eine zweite Feder (17), einen Federhalter (16), ein Ventillager (13), einen Adapter (60), O-Ring-Dichtungselemente (18), ein U-Kappen-Dichtungselement (19), eine erste Abdeckung, Schrauben (51) und eine zweite Abdeckung (45),
wobei das Motorkühlsystem so ausgestaltet ist, dass es entsprechend der Gesamtzahl der von den beiden Thermoaktuatoren ausgeübten Hübe arbeitet, wobei jeder Aktuator einem Einlass entspricht, der mit einem anderen Messpunkt des Motorkühlsystems verbunden ist; wobei die selbstgesteuerte Thermostatbaugruppe (10) auf Wachsbasis weiterhin folgendes umfasst:
- einen Einlass (11.2), der ausgestaltet ist, dass das Hauptkühlmittel vom Motorauslass (Eo) zum wärmeempfindlichen Teil des primären Thermoaktuators (20) strömt,
- einen Abtasteinlass (11.4), der ausgestaltet ist, dass das Abtastkühlmittel vom Motoreinlass (Ei) zum wärmeempfindlichen Teil des sekundären Thermoaktuators (30) strömt, und
- einen Abtast-Kühlerauslass (11.5), der das Abtastkühlmittel vom Abtasteinlass (11.4) zum Kühler (R) leitet.

2. Motorkühlsystem nach Anspruch 1, **dadurch gekennzeichnet, dass** es einen Abtasteinlasskanal (11.4), einen Abtast-Kühlerauslasskanal (11.5) sowie innerhalb der herkömmlichen Dreiwege-Thermostatbaugruppe auf Wachsbasis Einlass- (11.2), Bypass-Auslass- (11.1) und Kühlerauslasskanäle (11.3) umfasst.

3. Motorkühlsystem nach Anspruch 1 und 2, wobei der wärmeempfindliche Teil des sekundären Thermoaktuators (30) zwischen den Abtasteinlass- (11.4) und Abtast-Kühlerauslasskanälen (11.5) angeordnet ist, wobei der wärmeempfindliche Teil des primären Thermoaktuators (20) zwischen dem Einlass (11.2), dem Bypass-Auslass (11.1) und dem Kühler-Auslass (11.3) angeordnet ist.

4. Motorkühlsystem nach Anspruch 1, 2 und 3, wobei die wärmeempfindlichen Teile jedes Thermoaktuators thermisch voneinander isoliert sind.

5. Motorkühlsystem nach Anspruch 1 bis 4, wobei der sekundäre Thermoaktuator (30) entsprechend dem Kühlmitteltemperaturwert des Motoreinlasses (Ei) wirkt, wobei der primäre Thermoaktuator (20) entsprechend dem Kühlmitteltemperaturwert des Motorauslasses (Eo) wirkt.

6. Motorkühlsystem nach Anspruch 1, wobei das über den Abtasteinlasskanal (11.4) vom Motoreinlass (Ei) zum wärmeempfindlichen Teil des sekundären Thermoaktuators (30) geleitete Abtastkühlmittel durch den Abtast-Kühlerauslasskanal (11.5) zu den Kühlerkanälen (R) strömt.

7. Motorkühlsystem nach Anspruch 1 und 5, wobei der Temperaturwert des Motoreinlasses (Ei) vom Gesamttemperaturwert der vom Boden des Kühlers (R) und vom Bypass-Auslass (11.1) der Thermostatbaugruppe (10) einströmenden Kühlmittelmischung (M) abhängt.

8. Motorkühlsystem nach Anspruch 7, wobei das aus dem Boden des Kühlers (R) strömende Kühlmittel eine Mischung der Kühlmittelströme ist, die jeweils vom Abtast-Kühlerauslass (11.5) und dem Kühler-Auslass (11.3) der Thermostatbaugruppe in den Kühler (R) strömen.

9. Motorkühlsystem nach Anspruch 1, 7 und 8, wobei der Temperaturwert der Kühlmittelmischung (M) vom Öffnungsverhältnis zwischen Kühler-Auslass (11.3) und Bypass-Auslass (11.1), der Kühlleistung der Kühlerkanäle (R), der Betätigungstemperatur der Aktuatoren sowie von deren Hubkapazität abhängt.

10. Motorkühlsystem nach Anspruch 1, der über den Einlass (11.4) vom Motorauslass (Eo) zum wärmeempfindlichen Teil des primären Thermoaktuators (30) strömende Hauptkühlmittelstrom je nach der Gesamtzahl der Hübe, die von den beiden Thermoaktuatoren ausgeführt werden, nur durch den Bypass-Auslass (11.1) oder nur durch den Kühler-Auslass (11.3) oder sowohl durch den Bypass-Auslass (11.1) als auch durch den Kühler-Auslass (11.3) ausströmt.

11. Motorkühlsystem nach Anspruch 1, wobei sich die Stellung der Ventilstruktur (12) je nach Gesamthub der zwei Aktuatoren ändert und die Richtung des Kühlmittelstromes im Motorkühlsystem bestimmt.

12. Motorkühlsystem nach Anspruch 1, wobei die Verbindungswelle (14) es ermöglicht, dass die Hubrichtung eines Sekundärkolbens (31) mit der eines Primärkolbens (21) übereinstimmt und das Ventil (12) indirekt durch den zweiten Thermoaktuator geführt werden kann.

13. Motorkühlsystem nach Anspruch 1, wobei das Ventillager (13) Ventillager-Innenvorsprünge (13.1) aufweist, die mit den Ventil-Innenvorsprüngen (12.3) der Ventilstruktur (12) zusammenwirken, sowie ein Federlager (13.2), der ein Durchtreten der ersten Feder (15) verhindert.

14. Motorkühlsystem nach Anspruch 1, **dadurch gekennzeichnet, dass** der Adapter (60) eine sekundäre Adapterhülse (61), eine Mehrzahl von Adapter-Schraubenlöchern (62) und einen Adapter-Verbindungswellenlager (63) umfasst, wobei zur Isolierung zwischen den Kammern, in denen die wärmeempfindlichen Teile der Thermoaktuatoren angeordnet sind, das U-Kappen-Dichtungselement (19) zwischen dem Adapter (60) und der Außenfläche des Verbindungswelle (14) eingesetzt wird.

15. Motorkühlsystem nach Anspruch 1, wobei die erste Abdeckung (40) einen an der ersten Abdeckung angeordneten Abtasteinlass (40.1) umfasst, der dem an der Rahmenstruktur (11) angeordneten Abtasteinlass (11.4) entspricht, einen an der ersten Abdeckung angeordneten Abtast-Kühlerauslass (40.2), der dem an der Rahmenstruktur (11) angeordneten Abtast-Kühlerauslass (11.5) entspricht, einen sekundären Thermoaktuator-Lager (40.3) sowie an der ersten Abdeckung angeordnete Schraubenlöcher (40.4), mit welchen die Abdeckung mit dem Adapter (60) verbunden werden und für den wärmeempfindlichen Teil jedes Aktuators isolierte Kammern bereitgestellt werden können; wobei die zweite Abdeckung (45) einen an der zweiten Abdeckung angeordneten Bypass-Auslass (45.1), der dem an der Rahmenstruktur (11) angeordneten Bypass-Auslass (11.1) entspricht, sowie ein an der inneren Seitenfläche der zweiten Abdeckung angeordnetes Ventillager (45.2) umfasst.

## Revendications

1. Un système de refroidissement de moteur qui, constitué d'une entrée de moteur (Ei), d'une sortie de moteur (Eo), d'un radiateur (R), d'un ensemble thermostat à base de cire auto-commandé (10) avec un thermo-actionneur primaire (20), un thermo-actionneur secondaire (30), une soupape (12), une structure de cadre (11) à travers laquelle la structure de soupape (12) mentionnée est guidée, un arbre de connexion (14), un premier ressort (15), un deuxième ressort (17), un support de ressort (16) , un siège de soupape (13), un adaptateur (60), des éléments d'étanchéité à joint torique (18), un élément d'étanchéité à capuchon en U (19), un premier couvercle, des vis (51) et enfin un deuxième couvercle (45), permet un contrôle précis de la température du système de refroidissement du moteur en ajustant le liquide de refroidissement rapport de débit entre la sortie de dérivation (11.1) et la sortie du radiateur (11.3)
dans lequel le système de refroidissement du moteur est configuré pour fonctionner selon la somme des courses provenant de chaque thermo-actionneur qui correspond à une entrée connectée à différents points de détection du système de refroidissement du moteur les uns des autres ; l'ensemble thermostat à base de cire auto-commandé (10) comprenant en outre :
- une entrée (11.2) permettant au liquide de refroidissement principal de s'écouler depuis la sortie du moteur (Eo) vers la partie sensible à la chaleur du thermo-actionneur primaire (20),
- une entrée de détection (11.4) détectant ainsi les flux de liquide de refroidissement depuis l'entrée du moteur (Ei) vers la partie sensible à la chaleur du thermo-actionneur secondaire (30), et
- une sortie de radiateur de détection (11.5) pour canaliser le liquide de refroidissement de détection provenant de l'entrée de détection (11.4) pour s'écouler vers le radiateur (R).

2. Un système de refroidissement de moteur selon la revendication 1 et **caractérisé en ce qu'**il comprend des canaux d'entrée de détection (11.4) et de sortie de radiateur de détection (11.5), ainsi que des canaux d'entrée (11.2), de sortie de dérivation (11.1) et de sortie de radiateur (11.3) dans le système conventionnel. ensemble thermostat à trois voies à base de cire.

3. Un système de refroidissement de moteur selon les revendications 1 et 2, dans lequel la partie sensible à la chaleur du thermo-actionneur secondaire (30) est située entre les canaux d'entrée de détection (11.4) et de sortie de radiateur de détection (11.5) mentionnés, tandis que la partie sensible à la chaleur du thermo-actionneur primaire l'actionneur (20) est situé entre l'entrée (11.2), la sortie de dérivation (11.1) et la sortie du radiateur (11.3)

4. Un système de refroidissement de moteur selon les revendications 1, 2 et 3, dans lequel les parties sensibles à la chaleur de chaque thermo-actionneur sont thermiquement isolées les unes des autres.

5. Un système de refroidissement de moteur selon les revendications 1 à 4, dans lequel le thermo-actionneur secondaire (30) agit en fonction de la valeur de température du liquide de refroidissement à l'entrée du moteur (Ei) tandis que le thermo-actionneur primaire (20) agit en fonction de la valeur de la température du liquide de refroidissement à la sortie du moteur (Eo).

6. Un système de refroidissement de moteur selon la revendication 1, dans lequel le liquide de refroidissement de détection provenant de l'entrée du moteur (Ei) jusqu'à la partie sensible à la chaleur du thermo-actionneur secondaire (30) via le canal d'entrée de détection (11.4) s'écoule à travers le canal de la sortie du radiateur de détection (11.5) vers les canaux du radiateur (R).

7. Un système de refroidissement de moteur selon les revendications 1 et 5, dans lequel la valeur de température d'entrée de moteur (Ei) dépend de la valeur de température du liquide de refroidissement mélangé (M) comprenant le flux de liquide de refroidissement provenant à la fois du bas du radiateur (R) et de la sortie de dérivation (11.1) de l'ensemble thermostat (10).

8. Un système de refroidissement de moteur selon la revendication 7, dans lequel le flux de liquide de refroidissement provenant du bas du radiateur (R) est le mélange du flux de liquide de refroidissement provenant à la fois de la sortie du radiateur de détection (11.5) et de la sortie du radiateur (11.3) de l'ensemble de thermostat vers le radiateur (R).

9. Un système de refroidissement de moteur selon les revendications 1, 7 et 8, dans lequel la valeur de température du liquide de refroidissement mélangé (M) dépend du rapport d'ouverture entre la sortie du radiateur (11.3) et la sortie de dérivation (11.1), de la capacité de refroidissement des canaux du radiateur (R), température d'actionnement des actionneurs et capacité de course des actionneurs.

10. Un système de refroidissement de moteur selon la revendication 1, dans lequel le flux de liquide de refroidissement principal provenant de la sortie du moteur (Eo) vers la partie sensible à la chaleur du thermo-actionneur primaire (20) à travers l'entrée (11.2) s'écoule par une sortie de dérivation (11.1) ou juste la sortie du radiateur (11.3) ou à la fois la sortie de dérivation (11.1) et la sortie du radiateur (11.3) en fonction de la somme des courses provenant des deux thermo-actionneurs.

11. Un système de refroidissement de moteur selon la revendication 1, dans lequel la position de la structure de soupape mentionnée (12) change en fonction de la course totale provenant des deux actionneurs et spécifie la direction d'écoulement du liquide de refroidissement dans le système de refroidissement du moteur.

12. Un système de refroidissement de moteur selon la revendication 1, dans lequel l'arbre de connexion mentionné (14) permet que la direction de course du piston secondaire (31) soit la même que celle du piston primaire (21) et que la soupape (12) puisse être guidée indirectement par un deuxième thermo-actionneur.

13. Un système de refroidissement de moteur selon la revendication 1, dans lequel le siège de soupape (13) mentionné comprend des saillies intérieures de siège de soupape (13.1) correspondant aux saillies intérieures de soupape (12.3) de la structure de soupape (12) et un siège de ressort (13.2) empêchant le premier ressort (15) pour le traverser.

14. Un système de refroidissement de moteur selon la revendication 1, **caractérisé en ce que** l'adaptateur (60) mentionné comprend un siège de manchon secondaire d'adaptateur (61), des trous de vis d'adaptateur (62) et des parties de siège d'arbre de connexion d'adaptateur (63) et dans lequel pour assurer l'isolation entre les chambres dans lesquelles se trouvent les parties sensibles à la chaleur des actionneurs, l'élément d'étanchéité à capuchon en U (19) est inséré entre l'adaptateur (60) mentionné et la surface extérieure de l'arbre de connexion mentionné (14).

15. Un système de refroidissement de moteur selon la revendication 1, dans lequel le premier couvercle (40) mentionné comprend une première entrée de détection de couvercle (40.1) correspondant à l'entrée de détection (11.4) sur ladite structure de cadre (11), un siège de thermo-actionneur secondaire (40.3) et des premiers trous de vis de couvercle (40.4) permettant sa connexion avec l'adaptateur (60) pour former des chambres isolées pour la partie sensible à la chaleur de chaque actionneur ; et le second couvercle (45) mentionné comprend une seconde sortie de dérivation de couvercle (45.1) correspondant à la sortie de dérivation (11.1) sur la structure de cadre (11) et un deuxième siège de soupape de couvercle (45.2) à travers sa surface latérale interne.
